# Europäisches Patentamt

## European Patent Office

## Office européen des brevets

(11) Publication number: **0 191 877**
**B1**

(12) **EUROPEAN PATENT SPECIFICATION**

(45) Date of publication of patent specification: **23.09.87**

(51) Int. Cl.⁴: **B 01 J 8/10,** C 08 F 14/06, C 08 F 214/06, C 08 F 259/04

(21) Application number: **85101742.6**

(22) Date of filing: **16.02.85**

(54) Apparatus for gas phase polymerization of vinyl chloride.

(43) Date of publication of application:
**27.08.86 Bulletin 86/35**

(45) Publication of the grant of the patent:
**23.09.87 Bulletin 87/39**

(84) Designated Contracting States:
**DE FR IT**

(56) References cited:
**DE-B-1 137 216**
**GB-A-1 398 965**
**US-A-2 614 910**
**US-A-2 989 517**

(73) Proprietor: **TOYO SODA MANUFACTURING CO., LTD.**
**No. 4560, Oaza-tonda Shin-nanyo-shi Yamaguchi-ken (JP)**

(72) Inventor: **Nagano, Mineo**
**2717-1, Oaza Tonda**
**Shinnanyo-shi Yamaguchi-ken (JP)**
Inventor: **Saito, Michio**
**65-7, Betsumei 3-chome**
**Yokkaichi-shi Mie-ken (JP)**

(74) Representative: **Patentanwaltsbüro Cohausz & Florack**
**Postfach 14 01 47**
**D-4000 Düsseldorf 1 (DE)**

Courier Press, Leamington Spa, England.

## Description

Background of the invention
1. Field of the invention
    The present invention relates to a reaction vessel suitable for gas phase polymerization in which homopolymerization of monomeric vinyl chloride (hereinafter referred to as "VCM") or copolymerization of VCM with a minor amount of a comonomer copolymerizable therewith is continuously carried out under stirring in the gas phase.

2. Description of the related art
    Gas phase polymerization of VCM is known, for example, from Japanese Examined Patent Publication (Kokoku) No. 48—14666 and No. 52—44918. US—A—3578646 describes a gas phase polymerisation process wherein gaseous VCM and a seed polymer suspension is supplied to a fluidized bed reactor. However, the quality of a product obtained according to this gas phase polymerization is insufficient.

Summary of the invention
    We have made researches with a view to eliminating the above defect. As a result, we found that a product having properties comparable to those of products obtained by the conventional suspension polymerization or two-staged bulk polymerization can be obtained by semi-continuous or continuous gas phase polymerization.
    Thus, the present invention provides an apparatus for gas phase homopolymerization or copolymerization of vinyl chloride, which includes a vertically extending reaction vessel, nozzles for spraying monomeric vinyl chloride, and, nozzles for spraying a seed polymer slurry, a line for recovery of a monomeric vinyl chloride gas, a stirrer, a product withdrawal pipe, and a jacket. The stirrer includes an anchor type stirring vane having a vane length corresponding to 1/4 to 1/2 of the height of a reaction vessel. The product withdrawal pipe is designed so as to withdraw a formed polymer upwardly from the bottom portion in the interior of the reaction vessel. The jacket covers the entire reaction vessel and is divided into at least two portions in the vertical direction.

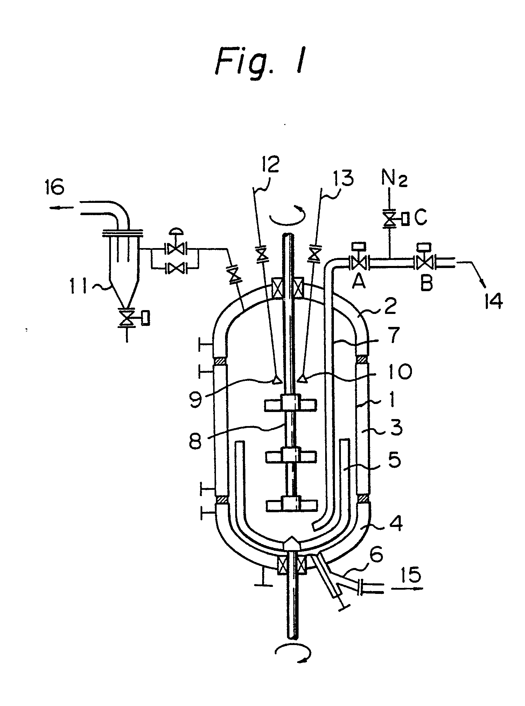

Brief description of the drawing
    Figure 1 is a diagram of the interior of a gas phase polymerization apparatus according to one embodiment of the present invention.

Description of the preferred embodiments
    The present invention will be illustrated in detail below.

(1) Seed polymer
    The characteristics of a seed polymer acting as a carrier for an initiator for gas phase polymerization has significant influences on the characteristics of a product obtained by gas phase polymerization. Accordingly, when the bulk prepolymerization is carried out at a conversion of 14% to 25%, a specific additive capable of narrowing the particle size distribution, modifying the inner structure of particles, and preventing advance of polymerization in the interior of particles during the gas phase polymerization step is added. After completion of the bulk prepolymerization, a specific additive is coated on the surfaces of particles, whereby internal permeation of the initiator causing the internal polymerization is prevented during the gas phase polymerization step per se is prevented and agglomeration of particles per se is prevented.
    Furthermore, when unreacted VCM is recovered and the powdery seed polymer is obtained, sufficient stirring, shearing, and heating are given to smooth the surfaces of particles and obtain a seed polymer having a relatively high bulk density and a good porosity.

(2) Gas phase polymerization
    The gas phase polymerization is carried out under such conditions that the value Pr (polymerization pressure Po/saturated vapor pressure Ps of VCM at the polymerization temperature) is in the range of $0.5 < Pr < 1$. If the value Pr is high, the reactivity is increased, the bulk density is increased, the particle size distribution becomes narrower, and the formation percentage of coarse particles is reduced. Furthermore, the hue of the product at the time of the processing and the thermal stability are improved. However, the fish eye characteristic (hereinafter referred to as "FE characteristic") is worsened.
    In order to maintain the FE characteristic at a good level and other properties at a practical level, it is necessary that the gas phase polymerization be carried out so that the value Pr is 0.65 to 0.85, preferably 0.70 to 0.80.
    Even if the value Pr is thus controlled, when the breeding ratio is higher than 5 to 6, the properties are degraded. In order to prevent this and maintain the properties at certain levels, it is necessary to control the breeding ratio in the range of 3.5 to 5.5 by supplying a fresh seed polymer.

(3) Spraying of polymer slurry
    Spraying of a slurry having a conversion ratio of 14% to 25%, obtained by the bulk prepolymerization, into the polymerization system is operationally reasonable as means for feeding a fresh seed polymer, but this method involves several problems. The most serious problem is that agglomeration of particles is readily caused and coarse particles are formed.
    As compared with a powdered seed polymer, the polymer slurry has a smaller particle size and particles are soft. Accordingly, it is considered that the polymer slurry adheres to a polymer powder formed by the gas phase polymerization and acts as a binder, and, hence, agglomerated coarse particles are readily formed.
    There are several means for preventing formation of such agglomerated coarse particles. The main means are as follows:
    (a) Addition of an additive effective for preventing agglomeration to a seed polymer slurry in advance

(b) Sufficient, uniform stirring to prevent agglomeration

(c) Maintenance relatively higher, value Pr, whereby the particles are almost in a wet state and sufficient reaction heat is generated, resulting, in almost no aggregation.

In view of the foregoing, it is understood that the following requirements should be satisfied by an apparatus for performing gas phase polymerization with stirring.

### 1) Homogeneous stirring of entire reaction mixture

In the case where the size of a polymerization vessel 1 is large, stirring is effected from the lower portion by an anchor type vane 5, as shown in Fig. 1. A speed less than 100 rpm, especially 40 to 80 rpm, is preferred for this stirring. It is preferred that a hollow hole be formed along the central axis of the stirring vane so that a temperature-detecting end can be inserted into this hole. In order to attain a sufficient stirring effect even in the upper portion, it is necessary that the length of the anchor type vane 5 be at least 1/4 of the height of the reaction vessel 1, but excessive elongation of the vane length is not necessary. In order to prevent irregular motions of the vane, it is preferred that the vane length be no more than 1/2 of the reaction vessel height. In the case where stirring is not uniform in the upper portion of the central region, an auxiliary stirrer is attached to a shaft 8 extending from the upper part of the reaction vessel or an auxiliary vane is attached to an extension from the lower portion of the shaft of the anchor type stirring vane. Preferably, one or more strip type stirring vanes are disposed as the auxiliary stirrer.

### 2) Jacket

The jacket is disposed to cover the reaction vessel entirely and is divided into at least two portions in the vertical direction. In order to prevent deposition of scale, the upper portion 2 of the jacket is controlled to maintain a relatively high polymerization temperature for preventing generation of liquefied VCM. Since the lower portion 4 of the jacket is always kept in contact with a powder layer, even if liquefied VCM is almost not generated, the liquid is immediately wiped away by the powder and almost no deposition of scale is caused. No particular advantage is brought about even if the jacket is divided into too large a number of portions. It is preferred that the jacket is divided into two or three portions, especially three portions including an intermediate jacket 3. This intermediate portion 3 is used for heating for preventiong deposition of scale at the time of starting the polymerization as well as the upper portion. When the thickness of the powder layer is sufficiently increased, the intermediate portion is used for cooling.

### 3) Pipe for withdrawal of product

It is possible to withdraw the product through a line 15 from the bottom portion of the polymerization vessel. However, in this case, if the valve sealing accidentally becomes ineffective, maintenance of the reaction pressure becomes difficult. Accordingly, the withdrawal pipe 6 in the bottom portion is used for emergencies. A pipe 7 having a size corresponding to the necessary withdrawal amount is hung down from the upper portion of the polymerization vessel for ordinary withdrawal of the product through a line 14. It is preferred that the diameter of this pipe be larger than the nominal diameter 25A specified in Japanese Industrial Standard (JIS) G—3459. Referring to Fig. 1, an automatic valve A (ball valve is preferred) is opened, the withdrawn product is fed to a metering tube (not show) disposed between the valve A and an automatic valve B, the valve A is closed, and the automatic valve B is then opened to feed the product to a discharger tank where a low pressure is maintained. Since the product powder is stirred and fluidized, this can easily be pneumatically transported. It is effective, for the purpose of preventing the deposition of scale in the inside of the withdrawal pipe, to flush, with nitrogen at a pressure higher than that in the polymerization vessel, the inside of the withdrawal pipe once per ten-odd to several tens withdrawals by a small sized automatic nitrogen valve C.

### 4) Spray nozzles

A VCM nozzle 9 and slurry nozzle 10 corresponding to the feed rates of VCM and the polymer slurry are provided. In order to prevent plugging of the VCM nozzle 9 by powder scattered in the polymerization vessel, it is preferred to use a turning type spray nozzle in which the inlet inner diameter is at least 1.0 mm and the outlet inner diameter is at least 1.5 mm. It is also preferred that at least two of such spray nozzles be arranged.

If the size of the slurry nozzle 10 is too large, large masses of the slurry may readily fall. If the size of the slurry nozzle is too small, the slurry nozzle is readily plugged. Accordingly, use of a turning type spray nozzle having an inlet inner diameter of 1.5 mm and an outlet inner diameter of 2.0 mm is preferred. It also is preferred that at least two of such spray nozzles be arranged. In Fig. 1, 12 is a vinyl chloride monomer feed line and 13 is a seed polymer slurry feed line.

### 5) Cyclone of gas-recovering line

This line is utilized for removal of the polymerization heat, the latent heat by evaporation of the sprayed VCM or unreacted VCM in the slurry. In order to maintain the reaction pressure at a constant level, the excess gas is withdrawn into the recovery line 16 from an adjusting valve through a pressure controller. Since a slight amount of the fine powdery polymer is contained in this gas, a cyclone 11 should be disposed to remove this fine powdery polymer.

In the case of continuous polymerization, the gas line extended to the cyclone will probably clog during long-time operation. Accordingly, it is preferred that double gas lines be laid out to the cyclone so that they may be exchanged with each other and cleaned alternately.

6) Temperature adjustment

It is preferred that the inner temperature be adjusted by controlling the feed rate in the VCM supply pump while keeping the slurry feed rate constant or keeping the temperature and quantity of cooling water in the lower portion of the jacket constant.

## Claims

1. An apparatus for gas phase homopolymerization or copolymerization of vinyl chloride, which comprises a vertically extending reaction vessel, a nozzle for spraying monomeric vinyl chloride, a nozzle for spraying a seed polymer slurry, a line for recovery of a monomeric vinyl chloride gas, a stirrer, a product withdrawal pipe, and a jacket, said stirrer comprising an anchor type stirring vane having a vane length corresponding to 1/4 to 1/2 of the height of a reaction vessel, said product withdrawal pipe being designed so as to withdraw a formed polymer upwardly from the bottom portion in the interior of the reaction vessel, and said jacket covering the entire reaction vessel and being divided into at least two portions in the vertical direction.

2. A polymerization apparatus as set forth in claim 1, wherein a hole extending along the central axis of the anchor type stirring vane is formed through the anchor type stirring vane and a thermometer is inserted into said hole.

3. A polymerization apparatus as set forth in claim 1, wherein one or more strip type stirring vanes are disposed as an auxiliary stirrer.

4. A polymerization apparatus as set forth in claim 1, wherein the nozzle for spraying monomeric vinyl chloride has an inlet inner diameter of at least 1.0 mm and an outlet inner diameter of at least 1.5 mm and the nozzle for spraying the seed polymer slurry has an inlet inner diameter of 1.5 mm and an outlet inner diameter of 2.0 mm.

5. A polymerization apparatus as set forth in claim 1, wherein the line for recovery of a monomeric vinyl chloride gas comprises two branches, each being provided with a pressure-adjusting device.

## Patentansprüche

1. Vorrichtung zur Homopolymerisation oder Copolymerisation von Vinylchlorid in der Gasphase, gekennzeichnet durch ein vertikal sich erstreckendes Reaktionsgefäß mit einer Düse zum Versprühen von monomerem Vinylchlorid, einer Düse zum Versprühen einer Aufschlämmung von Impfpolymerisat, einer Leitung zur Rückgewinnung von gasförmigem monomerem Vinylchlorid, einem Rührer, einer Produktabzugsleitung und einer Ummantelung, wobei der Rührer ein ankerförmiger Propellerflügel mit einer Flügellänge entsprechend einem Viertel bis der Hälfte der Höhe des Reaktionsgefäßes ist, die Produktabzugsleitung derart ausgeführt ist, daß ein gebildetes Polymerisationsprodukt vom Bodenteil im Inneren des Reaktionsgefäßes nach oben abgezogen wird und die Ummantelung das gesamte Reaktionsgefäß ummantelt und in mindestens zwei Abschnitte in vertikaler Richtung aufgeteilt ist.

2. Polymerisationsvorrichtung gemäß Anspruch 1, dadurch gekennzeichnet, daß eine Bohrung entlang der zentralen Achse des ankerförmigen Rührers vorgesehen ist und in der Bohrung ein Thermometer eingeführt ist.

3. Polymerisationsvorrichtung gemäß Anspruch 1, dadurch gekennzeichnet, daß am Rührer als Hilfspropellerflügel einer oder mehrere bandförmige Rührflächen vorgesehen sind.

4. Polymerisationsvorrichtung gemäß Anspruch 1, dadurch gekennzeichnet, daß die Düse zum Versprühen von monomerem Vinylchlorid auf der Zufuhrseite einen inneren Durchmesser von mindestens 1,0 mm und auf der Auslaßseite einen inneren Durchmesser von mindestens 1,5 mm an und die Düse zum Versprühen der Aufschlämmung von Impfpolymerisat auf der Zufuhrseite einen inneren Durchmesser von 1,5 mm und auf der Außenseite einen inneren Durchmesser von 2,0 mm hat.

5. Polymerisationsvorrichtung gemäß Anspruch 1, dadurch gekennzeichnet, daß die Leitung zur Wiedergewinnung von gasförmigem monomeren Vinylchlorid zwei Zweige umfaßt, wobei jeder mit einer Druckausgleichsvorrichtung versehen ist.

## Revendications

1. Appareil pour l'homopolymérisation ou la copolymérisation en phase gazeuse du chlorure de vinyle, que comprend un réacteur s'étendant verticalement, une buse pour la pulvérisation du chlorure de vinyle monomère, une buse pour la pulvérisation d'une bouillie de polymère d'ensemencement, un conduit pour la récupération du chlorure de vinyle gazeux momomère, un agitateur, un conduit d'évacuation du produit et une enveloppe, cet agitateur comprenant une pale d'agitation du type d'une ancre, ayant une longueur de pale correspondant au quart ou à la moitié de la hauteur du réacteur, le conduit d'évacuation du produit étant conçu pour évacuer vers le haut un polymère formé à partir de la partie inférieure de l'intérieur du réacteur et l'enveloppe couvrant la totalité du réacteur et étant divisée en au moins deux parties en sens vertical.

2. Appareil de polymérisation selon la revendication 1 dans lequel un trou s'étendant le long de l'axe central de la vanne d'agitation du type d'une ancre est formé à travers la vanne d'agitation du type d'une ancre et un thermomètre est introduit dans ce trou.

3. Appareil de polymérisation selon la revendication 1 dans lequel une ou plusieurs pales d'agitation du type de bandes sont disposées comme agitateurs auxiliaires.

4. Appareil de polymérisation selon la revendication 1 dans lequel la buse de pulvérisation du chlorure de vinyly monomère a un diamètre intérieur d'entrée d'au moins 1 mm et un diamètre intérieur de sortie d'au moins 1,5 mm et la buse de pulvérisation de la bouillie du polymère d'ensemencement a un diamètre intérieur d'entrée de 1,5 mm et un diamètre intérieur de sortie de 2 mm.

5. Appareil de polymérisation selon la revendication 1, dans lequel la conduite pour la récupération du chlorure de vinyle gazeux monomère comprend deux branches pourvues chacune d'un dispositif pour ajuster la pression.

# Fig. I